# EUROPEAN PATENT SPECIFICATION

(11) **EP 0 456 627 B1**
(45) Date of publication and mention of the grant of the patent: **21.06.1995**
(21) Application number: 91850105.7
(22) Date of filing: 24.04.1991
(51) Int. Cl.: C13D 1/00, A23L 3/358, C13D 1/14

(54) **Method of inhibiting microbial growth**
Verfahren zur Hemmung des Mikrobenwachstums
Procédé d'inhibition de la croissance microbienne

(30) Priority: 10.05.1990 SE 9001697
(43) Date of publication of application: 13.11.1991
(73) Proprietor: EKA NOBEL AB, S-445 01 Bohus (SE)
(72) Inventor: Dalin, Ivan, S-442 30 Kungälv (SE); Hellström, Pia, S-463 00 Lilla Edet (SE)
(74) Representative: Schöld, Zaid

(56) References cited:
- FR-A- 338 333
- FR-A- 2 163 470
- FR-A- 2 397 155
- US-A- 3 728 134
- US-A- 4 518 585
- ZUCKERINDUSTRIE vol. 108, no. 1, 1983, pages 24- 35; NICKISCH-HARTFIEL ET AL.: 'UNTERSUCHUNGEN VON DESINFEKTIONSMITTELN FÜRDEREN EINSATZ IN EXTRAKTIONSANLAGEN'

## Description

The present invention concerns a method of inhibiting the growth of thermophilic bacteria in organic material by the addition of hydrogen peroxide and a nonionic surfactant. The invention also concerns a composition useful for performing the method.

In the food industry in general, unwanted microbial growth must be prevented at the same time as bactericides harmful to human beings should be avoided. At preparation of sugar, in which sugar is extracted from the raw material in a diffuser at a temperature of about 69°C and a pH-value of about 5.5-6.4, the growth of sugar-consuming thermophilic bacteria such as Saccharococcus thermophilus and Lactobacillus sp. often occur, resulting in obstructions in the equipment and less yield of sugar. Traditionally formaldehyde has been used for preventing the growth. However, it is desirable to avoid formaldehyde since it is allergy-causing and suspected to be carcinogenic. Attempts to use hydrogen peroxide, optionally mixed with peracetic acid, have not resulted in satisfactory killing of particularly thermophilic Lactobacillus bacteria. Thus, there is a great demand for a method of replacing the formaldehyde at preparation of sugar. The problems above are dealt with in detail in R. Nystrand, "Microflora in Beet Sugar Extraction", Doctoral Dissertation at Lund's University, Department of Microbiology, (1984) pages 8-16, 25-32 and 93-105.

The invention is intended to solve the problem of inhibiting the growth of thermophilic bacteria in organic material containing sugar, particularly in the food industry and most particularly at preparation of sugar. The antibacterial agent to be used must be harmless to those handling it and be possible to remove or destroy without the formation of harmful products. Further, it must be active at the conditions prevailing during the extraction of sugar from sugar beets or sugar canes, i.e. temperatures at about 69°C, pH at about 5.5-6.4 and a sucrose content of about 15% by weight, at the same time as it neither is corrosive nor is harmful to the equipment in any other way. Finally, it must not be too expensive to prepare.

The problem has been found possible to solve by the method according to claim 1. More specifically, the invention concerns a method of inhibiting growth of thermophilic bacteria in organic material containing sugar, wherein hydrogen peroxide and at least one nonionic surfactant are added to the organic material. The invention is particularly useful if the organic material substantially consists of sugar-beets or sugar-canes and is in the form of a water-slurry, especially if the hydrogen peroxide and the surfactant are added to a diffuser, i.e. an apparatus for performing the extraction of sugar from sugar-beets or sugar-canes.

The invention is based on the finding that hydrogen peroxide and nonionic surfactants show a synergistic effect in respect of killing thermophilic bacteria in organic material containing sugar, especially at high temperatures, i.e when the organic material has a temperature exceeding 55°C, particularly at a temperature exceeding 60°C, most particularly exceeding 65°C.

The use of hydrogen peroxide in combination with surfactants in cleaning and disinfection of solid material is known. In Chemical Abstracts 78-93446 (Corresponding to Bochenin Yu., "Effect of surface-active agents on the efficiency of aerosol disinfection", Vses. Nauch. Issled. Inst. Vet. Sanit., 1969, 33, pp 315-321), EP, A, 109279, DD, A, 96833, GB, A, 1563713 and GB, A, 1561680, hydrogen peroxide is used in combination with anionic surfactants, mainly in order to decrease the surface tension and increase the stability. The two last mentioned patents do not recommend the use nonionic surfactants. From DE, A, 3205318 the use of hydrogen peroxide in combination with a nonionic surfactant is known, which surfactant, however, is said to only have a cleaning effect. Also US, A, 4518585 mentions the use of hydrogen peroxide in combination with a nonionic surfactant which is said to stabilize the hydrogen peroxide against organic matter contamination, enabling repeated use of the composition over an extended period of time. The use of hydrogen peroxide in combination with surfactants in detergents for textile washing is also known, see for example DE, A, 2544616. Accordingly, hydrogen peroxide in combination with surfactants have not been previously used for the purpose of decreasing the growth of thermophilic bacteria in organic material containing sugar, and none of the publications above indicate the existence of a synergistic effect in respect of killing thermophilic bacteria. Moreover, it has not been possible to show any synergistic effect in killing non-thermophilic bacteria. Furthermore, there is no recorded bactericidal effect of nonionic surfactants as such.

According to the invention, the nonionic surfactant should be compatible with hydrogen peroxide, i.e being stable against decomposition in contact with hydrogen peroxide and not causing decomposition of the hydrogen peroxide, and be acceptable for use in food industry. Suitably, the surfactant is an ethylene oxide adduct, preferably having from 6 to 15, most preferably having from 10 to 13 ethylene oxide monomers. Ethoxylated alcohols or phenols are particularly preferred, preferably primary and most preferably straight chained aliphatic alcohols preferably having from 8 to 15, most preferably having from 10 to 13 carbon atoms. Examples of useful surfactants include the commercially available Berol 048^{(R)} (substantially ethoxylated tridecyl alcohol having 10 ethylene oxide monomers) and Berol 267^{(R)} (substantially ethoxylated nonyl phenol having 8 ethylene oxide monomers), among which Berol 048^{(R)} is particularly preferred.

The weight ratio hydrogen peroxide/surfactant is not critical. From an economic point of view, a low content of surfactants is preferred, suitably so the above ratio exceeds 0.4, preferably so it exceeds 1. In order to obtain satisfactory bactericidal effect, the content of the surfactant should not be too low. The ratio above is suitably less than 8, preferably less than 5. The substances should be added in an amount high enough for keeping the number of thermophilic bacteria on an acceptable level for avoiding obstructions in the equipment and/or unwanted loss of sugar, but not in such a high amount that desired reactions or processes are disturbed too much. Generally the upper limit is set by the economy. In most cases it has been found that from 25 to 1600, preferably from 60 to 800 grams hydrogen peroxide per tonne sugar should be added together with a nonionic surfactant. If the organic material essentially consist of sugar-beets in a water slurry, suitably from 5 to 320, preferably from 12 to 160 grams hydrogen peroxide per tonne of sugar-beets are added. The substances may be added each at a time or in the form of an in advance prepared mixture or solution containing hydrogen peroxide and at least one nonionic surfactant in a suitable ratio relative each other. The concentration of the solution is not critical for the bactericidal effect. If the mixing of the organic material during the addition of the disinfectant is poor, a diluted solution is preferred, which solution may contain as little as down to 0.1% by weight of hydrogen peroxide, however preferably more than 1% by weight, most preferably more than 20% by weight of hydrogen peroxide. Too high a concentration might cause problems with the stability of the surfactant. In most cases, solutions containing up to 55% by weight, preferably up to 50% by weight, most preferably up to 40% by weight of hydrogen peroxide may be used. The solution may also contain peracetic acid, the weight ratio peracetic acid/hydrogen peroxide being from 0 to 0.5. A particularly preferred solution contains from 25 to 35% by weight of hydrogen peroxide and from 5 to 12% by weight of nonionic surfactant, preferably an ethylene oxide adduct as previously described, the balance preferably substantially being water, and is suitably added in an amount from 100 to 5000, preferably from 200 to 2500 grams solution per tonne sugar. If the organic material essentially consists of sugar beets in a water slurry, the disinfectant is suitably added in an amount from 20 to 1000, preferably from 40 to 500 grams solution per tonne of sugar beet.

The method has been found very advantageous when the sugar-containing organic material has a temperature exceeding 55°C, preferably exceeding 60°C, most preferably exceeding 65°C. At temperatures exceeding 70°C the addition of disinfectants is less important, and at temperatures exceeding 72°C no disinfectant is normally required. The method is particularly suitable when the organic material contains sucrose, preferably in an amount from 0.1 to 50% by weight, most preferably from 5 to 30% by weight, and particularly at a pH-value from 5.5 to 6.4. When the above conditions are prevailing, the growth of thermophilic bacteria is extensive. At preparation of sugar, it occurs in the diffusers in which the sucrose is extracted from the raw material. Generally, this is a continuous process in which the raw material, often in the form of finely sliced sugar-beets or sugar-canes, are supplied to one of the ends of the diffuser and are transported with for example a screw conveyer against the other end, while water flows in the opposite direction, extracting the sucrose from the raw material. If the raw material substantially consists of sugar beets, the sucrose content of the beets in the diffuser varies from about 15% by weight at the inlet to about 0.1% by weight at the outlet, while the sucrose content of the extraction water increases and is about 15% by weight at the outlet. Thus, the sucrose content of the entire material is substantially uniform throughout the diffuser. According to the invention, microbial growth of thermophilic bacteria in the diffuser, particularly of thermophilic Lactobacillus bacteria, most particularly of Lactobacillus sp. strain 771, can be inhibited by continuously or discontinuously adding hydrogen peroxide and a nonionic surfactant to the raw material, i.e. the beets or the sugar canes, or to the extraction water. Possibly remaining surfactants will not be included into the crystallized sugar. Generally the diffuser is horizontal (RT-diffuser), slightly inclining (trough) or vertical (tower).

In a particularly preferred embodiment, the following composition is useful to perform the method according to the invention. The composition contains hydrogen peroxide and at least one nonionic surfactant, wherein the surfactant is an ethoxylated primary alcohol comprising from 10 to 13 ethylene oxide monomers. Ethoxylated primary and especially straight chained alcohols, preferably having from 10 to 15, most preferably having from 11 to 13 carbon, are particularly preferred. The previously mentioned Berol 048^{(R)} is an example of a preferred surfactant. Suitably, the composition is an aqueous solution containing from 0.1 to 55% by weight, preferably from 1 to 50% by weight, most preferably from 20 to 40% by weight of hydrogen peroxide and a nonionic surfactant as above, the weight ratio hydrogen peroxide/surfactant being from 0.4 to 8, preferably from 1 to 5, the balance preferably substantially being water. The composition may also contain peracetic acid, the weight ratio peracetic acid hydrogen peroxide being from 0 to 0.5.

As previously mentioned, the invention has been found particularly advantageous at preparation of sugar, but may also be applied in other situations involving problems of growth of thermophilic bacteria in sugar-containing material. The invention is further illustrated by the non-limiting examples below. If not otherwise stated, all percentages are in % by weight.

EXAMPLE 1: TSB-substrate containing 5 g/l trypton (Difco), 5 g/l meat extract (Difco), 5 g/l sucrose, 1 g/l dipotassium hydrogenphosphate (K₂HPO₄) and having a pH-value of 6.8, and TSA-substrate containing 24 g/l trypton-glucose extract-agar (TGE, Difco) and 5 g/l sucrose, have been used in all the experiments. The experiments concern inactivation of a pure culture of Lactobacillus sp. strain 771 stored in TSA for 2-3 days at 4°C and cultivated in TSB for 16 hours at 55°C. 5 ml of such a culture was added to tubes containing 9 ml TSB temperated to 69°C in an aqueous bath for 1 hour. After 1 hour in TSB, samples were taken for determination of the number of bacteria. That number was used as the initial value set and was generally determined to 10⁵-10⁶ CFU (colony forming units)/ml. Immediately after the sampling, the disinfectant to be tested was added in an amount of 120 »l/litre substrate, whereupon samples for determination of the number of bacteria were taken at certain intervals during 2 hours. After every experiment the D-value, i.e. the time required for killing 90% of the bacteria, was determined. In order to determine the number of bacteria, 100 »l substrate was transferred from dilution tubes (0.85% NaCl) to each one of two TSA-plates, which were incubated in plastic bags for 48 hours at 55°C before the number of colonies were counted. The disinfectants tested were hydrogen peroxide and Ekarox B10^{(R)} respectively mixed with the nonionic surfactant Berol 048^{(R)} (about 15% water, about 85% surfactant, substantially tridecyl alcohol having 10 ethylene oxide monomers) in different relative ratios. The term "hydrogen peroxide" refers to an aqueous solution of about 35% by weight of hydrogen peroxide, the balance being water, and "Ekarox B10^{(R)}" refers to an aqueous solution consisting of about 30% by weight of hydrogen peroxide, about 5% by weight of peracetic acid, about 5% by weight of acetic acid and small amounts of sulfuric acid, the balance being water. In experiment 2.6, the surfactant was added 5 minutes before the hydrogen peroxide, while premixed compositions were used in the other experiments. The table below is a summary of the experiments performed.

| Experiment No. | Antimicrobial composition (% by volume) | | | D-value minutes | Total killing |
|---|---|---|---|---|---|
| | 35% H₂O₂ | Ekarox B 10 | Berol 048 | | |
| 1.1 | | 100 | | 12,4 | no |
| 1.2 | 100 | | | 20,7 | no |
| 1.3 | | | 100 | 25,6 | no |
| 2.1 | | 90 | 10 | 11,1 | yes |
| 2.2 | | 85 | 15 | 9,9 | yes |
| 2.3 | | 75 | 25 | 9,4 | yes |
| 2.4 | 90 | | 10 | 2,2 | yes |
| 2.5 | 75 | | 25 | 1,1 | yes |
| 2.6 | 75 | | 25 | 4,5 | yes |

The results show a very evident synergy when using Berol 048^{(R)}, particularly in combination with 35% hydrogen peroxide solution. Experiment 2.5 and 2.6 show that separate additions of hydrogen peroxide and surfactant each one at a time gives a weaker but still very good bactericidal effect.

EXAMPLE 2: MIC-tests (minimum inhibition concentration) for a number of different non-thermophilic bacteria were performed with four different disinfectants: 35% hydrogen peroxide solution alone, 90% by volume of 35% hydrogen peroxide solution + 10% by volume of Berol 048^{(R)}, Ekarox B10^{(R)} alone, and 90% by volume of Ekarox B10^{(R)}+ 10% by volume of Berol 048^{(R)}. The bacteria were cultivated in a nutrient solution NB (nutrient broth) from Difco and the different disinfectants were added in different concentrations. After 24 hours at 25°C, agar plates were inoculated with the solutions in order to check the existence of remaining living culture. The table below shows the concentrations required for total killing in »l disinfectant per litre nutrient solution.

| Bacterium | H₂O₂ | Ekarox B10 | H₂O₂+ surf. | Ekarox B10 +surf. |
|---|---|---|---|---|
| Enterobacter Aerogenes | 100 | 100 | 200 | 100 |
| Escherichia Coli | 100 | 50 | 100 | 100 |
| Erwinia Carotowa | 25 | 50 | 50 | 25 |
| Proteus Mirabilis | 500 | 500 | 500 | 500 |
| Serratia Marcescens | 500 | 500 | 500 | 500 |
| Pseudomonas Fluroescens | 25 | 25 | 25 | 25 |
| Micrococcus Luteus | 200 | 200 | 200 | 200 |
| Staph. Epidermidis | 25 | 50 | 25 | 50 |
| Leuconostock Cremoris | 100 | 200 | 100 | 200 |
| Streptococcus Faecalis | 50 | 100 | 50 | 100 |
| Pediococcus Sp. | 200 | 500 | 200 | 500 |
| Bacillus Subtilis | 200 | 200 | 200 | 200 |
| Lactobacillus Plantarum | 200 | 200 | 200 | 500 |

The experiments show that the addition of a surfactant to a disinfectant containing hydrogen peroxide do not result in an improved effect in respect of killing any of the bacterium strains tested, which renders the synergistic effect in respect of killing thermophilic bacteria even more surprising.

EXAMPLE 3: In a sugar factory consuming 7000 tonnes of sugar-beets per day, the extraction was performed in two parallel-connected towers, each one with a height of 18 meters and a diameter of 6 meters. The temperature was varying from 68 to 72°C and the pH-value was varying from 5.5 to 6.0. The growth of thermophilic bacteria was kept under control by continuous addition of a disinfectant consisting of 90% by volume of 35% hydrogen peroxide and 10% by volume of Berol 048^{(R)} in an amount corresponding to about 200 grams disinfectant solution per tonne sugar-beets.

## Claims

1. A method of inhibiting the growth of thermophilic bacteria in organic material containing sugar, **characterised** in that hydrogen peroxide and at least one nonionic surfactant are added to the organic material.

2. A method as claimed in claim 1, **characterised** in that the organic material substantially consists of sugar-beets or sugar-canes and is in the form of a water-slurry.

3. A method as claimed in claim 2, **characterised** in that the hydrogen peroxide and the surfactant are added to an apparatus for extraction of sugar from sugar-beets or sugar-canes.

4. A method as claimed in any of the claims 1-3, **characterised** in that the weight ratio hydrogen peroxide/surfactant exceeds 0.4 and is less than 8.

5. A method as claimed in any of the claims 1-4, **characterised** in that an aqueous solution containing hydrogen peroxide and at least one nonionic surfactant is added.

6. A method as claimed in any of the claims 1-5, **characterised** in that from 25 to 1600 grams of hydrogen peroxide per tonne sugar is added.

7. A method as claimed in any of the claims 1-6, **characterised** in that the organic material has a temperature exceeding 55°C.

8. A method as claimed in any of the claims 1-7, **characterised** in that the surfactant is an ethylene oxide adduct.

9. A method as claimed in claim 8, **characterised** in that the surfactant is an ethoxylated primary alcohol comprising from 6 to 15 ethylene oxide monomers.

## Patentansprüche

1. Verfahren zur Wachstumshemmung von thermophilen Bakterien in einem Zucker enthaltenden organischen Stoff, dadurch gekennzeichnet, daß dem organischen Stoff Wasserstoffperoxid und mindestens ein nicht-ionischer oberflächenaktiver Stoff zugegeben werden.

2. Verfahren nach Anspruch 1, dadurch gekennzeichnet, daß der organische Stoff im wesentlichen aus Zuckerrüben oder Zuckerrohr besteht und die Form einer wäßrigen Aufschlämmung hat.

3. Verfahren nach Anspruch 2, dadurch gekennzeichnet, daß das Wasserstoffperoxid und der oberflächenaktive Stoff einem Gerät zur Extraktion von Zucker aus Zuckerrüben oder Zuckerrohr zugegeben werden.

4. Verfahren nach einem der Ansprüche 1 bis 3, dadurch gekennzeichnet, daß das Gewichtsverhältnis Wasserstoffperoxid/oberflächenaktiver Stoff größer als 0,4 und kleiner als 8 ist.

5. Verfahren nach einem der Ansprüche 1 bis 4, dadurch gekennzeichnet, daß eine wäßrige Lösung zugegeben wird, die Wasserstoffperoxid und mindestens einen nicht-ionischen oberflächenaktiven Stoff enthält.

6. Verfahren nach einem der Ansprüche 1 bis 5, dadurch gekennzeichnet, daß 25 bis 1600 g Wasserstoffperoxid pro Tonne Zucker zugegeben werden.

7. Verfahren nach einem der Ansprüche 1 bis 6, dadurch gekennzeichnet, daß der organische Stoff eine Temperatur von über 55°C besitzt.

8. Verfahren nach einem der Ansprüche 1 bis 7, dadurch gekennzeichnet, daß der oberflächenaktive Stoff ein Ethylenoxidaddukt ist.

9. Verfahren nach Anspruch 8, dadurch gekennzeichnet, daß der oberflächenaktive Stoff ein ethoxylierter primärer Alkohol ist, der 6 bis 15 Ethylenoxidmonomere umfaßt.

## Revendications

1. Procédé permettant d'inhiber la prolifération de bactéries thermophiles dans une matière organique contenant du sucre, **caractérisé** en ce que l'on ajoute à cette matière organique du peroxyde d'hydrogène et au moins un tensio-actif non-ionique.

2. Procédé conforme à la revendication 1, **caractérisé** en ce que la matière organique est essentiellement constituée de betteraves à sucre ou de cannes à sucre et se trouve sous la forme d'une suspension aqueuse.

3. Procédé conforme à la revendication 2, **caractérisé** en ce que l'on ajoute du peroxyde d'hydrogène et un tensio-actif dans un appareillage d'extraction du sucre de betteraves à sucre ou de cannes à sucre.

4. Procédé conforme à l'une des revendications 1 à 3, **caractérisé** en ce que le rapport pondéral du peroxyde d'hydrogène au tensio-actif vaut plus de 0,4 et moins de 8.

5. Procédé conforme à l'une des revendications 1 à 4, **caractérisé** en ce que l'on ajoute une solution aqueuse contenant du peroxyde d'hydrogène et au moins un tensio-actif non-ionique.

6. Procédé conforme à l'une des revendications 1 à 5, **caractérisé** en ce que l'on ajoute de 25 à 1600 g de peroxyde d'hydrogène par tonne de sucre.

7. Procédé conforme à l'une des revendications 1 à 6, **caractérisé** en ce que la température de la matière organique dépasse 55°C.

8. Procédé conforme à l'une des revendications 1 à 7, **caractérisé** en ce que le tensio-actif est un produit d'addition d'oxyde d'éthylène.

9. Procédé conforme à la revendication 8, **caractérisé** en ce que le tensio-actif est un alcool primaire éthoxylé comportant de 6 à 15 motifs d'oxyde d'éthylène.
